# EUROPEAN PATENT APPLICATION

(11) **EP 2 053 681 A1**
(43) Date of publication of application: **29.04.2009**
(21) Application number: 07790335.9
(22) Date of filing: 07.08.2007
(51) Int. Cl.: H01M 8/04, F16L 37/14, H01M 8/10

(54) **FUEL CELL SOCKET AND FUEL CELL USING SAME**

(30) Priority: 15.08.2006 JP 2006221388
(71) Applicant: Kabushiki Kaisha Toshiba, Minato-ku Tokyo 105-8001 (JP); Toyo Seikan Kaisha, Ltd., Tokyo 100-8522 (JP)
(72) Inventor: TAKAHASHI, Kenichi, Minato-ku Tokyo 105-8001 (JP); YOSHIHIRO, Kenji, Yokohama-shi Kanagawa 230-0001 (JP); YAMAMORI, You, Yokohama-shi Kanagawa 230-0001 (JP)
(74) Representative: Henkel, Feiler & Hänzel
(86) International application number: PCT/JP2007/000847
(87) International publication number: WO 2008/020493

(57) **Abstract**

A fuel cell socket (4) to which a nozzle (8) of a fuel cartridge is removably connected includes a socket body (32) having a nozzle inserting port (31) into which the nozzle (8) is inserted; a valve mechanism housed in the socket body (32); an elastic holder (39) arranged in the socket body (32) to seal a liquid fuel passage when the valve mechanism is opened; and a guide member (38) arranged within the socket body (32) to guide a leading end outer peripheral portion of the nozzle (8) connected to the socket and to restrict an inclination of the nozzle (32) in a connected state.

## Description

### Technical Field

The present invention relates to a fuel cell socket and a fuel cell using the same.

### Background Art

Attempts have been made to use a fuel cell as a power source or a charger for portable electronic equipment such as a notebook computer, a cellular phone and the like to make it possible to use them for a long time without recharging. The fuel cell has characteristics that electricity can be generated by merely supplying a fuel and air and generated continuously for a long time by replenishing the fuel. Therefore, if the fuel cell can be made compact, it is a very advantageous system as a power source or a charger for portable electronic equipment.

A direct methanol fuel cell (DMFC) using a methanol fuel having a high energy density is promising as a power source or the like for portable appliances because it can be made compact and its fuel can also be handled with ease. As a method of supplying the liquid fuel of the DMFC, there are known an active method such as a gas supply type, a liquid supply type or the like and a passive method such as an inside vaporization type or the like which supplies the liquid fuel from a fuel storing section to a fuel electrode by vaporizing in the cell. The passive method is advantageous for miniaturization of the DMFC.

A passive type DMFC of an internal vaporization type or the like vaporizes the liquid fuel stored in the fuel storing section via a fuel-impregnated layer, a fuel vaporization layer or the like to supply the vaporized component of the liquid fuel to a fuel electrode (see References 1 and 2). The liquid fuel is supplied to the fuel storing section by means of a fuel cartridge. For a satellite type (external injection type) fuel cartridge, a coupler provided with a socket and a nozzle each having a valve mechanism therein is used to stop and inject the liquid fuel (see Reference 3).

The liquid fuel stored in the fuel cartridge is supplied by connecting the nozzle fitted to the fuel cartridge to a socket provided on the fuel storing section of the fuel cell, and opening the valve mechanisms of the nozzle and the socket. If the nozzle of the fuel cartridge is not appropriately guided by the socket when the nozzle is connected by inserting into the socket of the fuel cell, the fuel cartridge is easily inclined largely. If the fuel cartridge is largely inclined, there is a problem that a sealing part of the socket is damaged.
Reference 1: JP-B 3413111(Patent Publication)
Reference 2: Pamphlet of (PCT) International Publication No. 2005/112172
Reference 3: JP-A 2004-127824 (KOKAI)

### Disclosure of the Invention

The present invention provides a fuel cell socket which enables to suppress an inclination of a fuel cartridge and damage to the socket parts associated with it by enhancing a guiding function when a nozzle of the fuel cartridge is connected, and a fuel cell having reliability and safety enhanced by applying the socket.

According to an aspect of the present invention, there is provided a fuel cell socket to which a nozzle of a fuel cartridge is removably connected and which serves as a fuel supply section to supply a fuel cell with a liquid fuel stored in the fuel cartridge, comprising a socket body having a nozzle inserting port into which the nozzle is inserted; a valve mechanism housed in the socket body; an elastic holder arranged in the socket body to seal a fuel passage when the valve mechanism is opened; and a guide member arranged within the socket body to guide a leading end outer peripheral portion of the nozzle connected to the socket and to restrict an inclination of the nozzle in a connected state.

According to an aspect of the present invention, there is provided a fuel cell, comprising a fuel receiving portion provided with the fuel cell socket according to claim 1 to receive a liquid fuel supplied through a nozzle of a fuel cartridge connected to the socket; a fuel storing section storing the liquid fuel supplied from the fuel cartridge; and a power generation section operating to generate power upon receiving the liquid fuel from the fuel storing section.

### Brief Description of the Drawings

[FIG. 1] Fig. 1 is a diagram showing a structure of a fuel cell according to an embodiment of the present invention and a combined structure of the fuel cell and a fuel cartridge.
[FIG. 2] Fig. 2 is a sectional view showing a structure (unconnected state) of a socket of the fuel cell and a nozzle of the fuel cartridge shown in Fig. 1.
[FIG. 3] Fig. 3 is a sectional view showing a connected state of the socket and the nozzle shown in Fig. 2.
[FIG. 4] Fig. 4 is a top view of the socket shown in Fig. 2. [FIG. 5] Fig. 5 is a sectional view of the socket shown in Fig. 2.
[FUG. 6] Fig. 6 is a perspective view showing a structure example of a guide member applied to the socket shown in Fig. 2.
[FIG. 7] Fig. 7 is a sectional view showing a modified example of the socket shown in Fig. 2.
[FIG. 8] Fig. 8 is a sectional view showing a structure of an internal vaporization type DMFC as an example of a fuel cell according to an embodiment of the present invention.

### Explanation of Reference Numerals

1: Fuel cell, 2: cell, 3: fuel storing section, 4: socket, 5: fuel receiving portion, 6: fuel cartridge, 7: cartridge body, 8: nozzle, 12: nozzle head, 13: base section, 14: inserting portion, 16: peripheral groove, 17: key portion, 18: valve holder, 19, 40: valve, 19a, 40a: valve head, 19b, 40b: valve stem, 20, 41: valve seat, 21, 42: O-ring, 22, 43: compression spring, 31: nozzle inserting port, 32: socket body, 33: upper outer peripheral portion, 34: lower outer peripheral portion, 35: middle body part, 36: lower body part, 38: guide member, 39: rubber holder, 45: nozzle holding mechanism, 46: key groove.

### Best Mode for Carrying out the Invention

Modes of conducting the present invention will be described below with reference to the drawings. Embodiments of the present invention are described with reference to the drawings, which are provided for illustration only, and the present invention is not limited to the drawings.

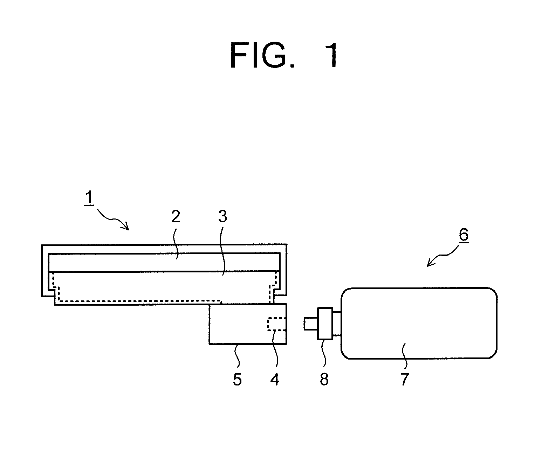

Fig. 1 is a diagram showing a schematic structure of a fuel cell according to an embodiment of the present invention and a combined structure of the fuel cell and a fuel cartridge. A fuel cell 1 shown in Fig. 1 is provided with a power generation section 2 and a fuel storing section 3. A fuel receiving portion 5 which has a socket 4 and becomes a liquid fuel supply portion is provided on the under surface of the fuel storing section 3. The socket 4 has a valve mechanism therein and is in a closed state except when the liquid fuel is supplied. The fuel cell 1 may have a structure that the liquid fuel is supplied directly from the fuel receiving portion 5 to the power generation section 2 without through the fuel storing section 3.

A fuel cartridge 6 has a cartridge body (container) 7 for storing the liquid fuel for the fuel cell. A nozzle 8 which is a fuel discharge portion to supply the liquid fuel from the cartridge body 7 to the fuel storing section 3 of the fuel cell 1 is attached to a tip end of the cartridge body 7. The nozzle 8 has a valve mechanism therein which is in a closed state except when the liquid fuel is supplied. The fuel cartridge 6 is a so-called satellite type (external injection type) fuel cartridge and connected to the fuel cell 1 only when the liquid fuel is injected into the fuel storing section 3.

The cartridge body 7 of the fuel cartridge 6 stores the liquid fuel suitable for the fuel cell 1. In a case where the fuel cell 1 is a direct methanol fuel cell (DMFC), methanol fuels such as aqueous methanol solutions having various concentrations, pure methanol and the like can be used for the liquid fuel. The liquid fuel stored in the cartridge body 7 is not necessarily limited to the methanol fuel but may be another liquid fuel, for example, an ethanol fuel such as an aqueous ethanol solution or pure ethanol, a propanol fuel such as an aqueous propanol solution or pure propanol, a glycol fuel such as an aqueous glycol solution or pure glycol, dimethyl ether, formic acid, or the like. At any event, the cartridge body 7 stores a liquid fuel suitable for the fuel cell 1.

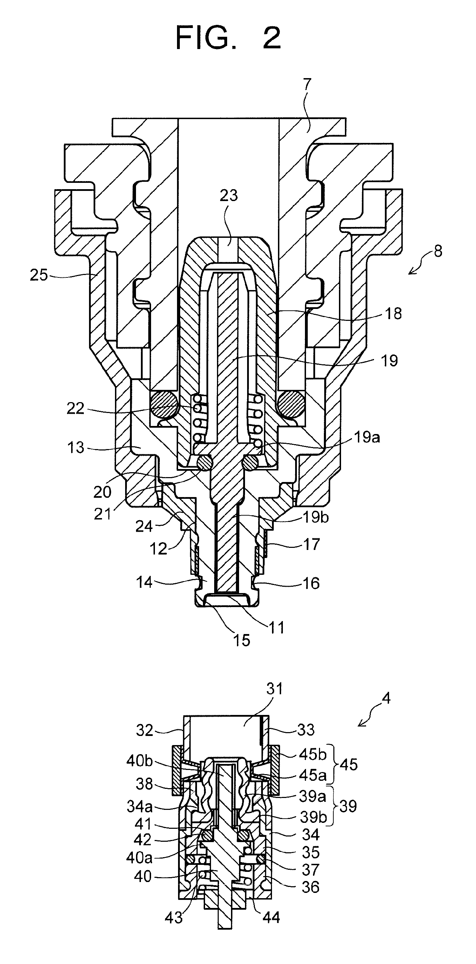

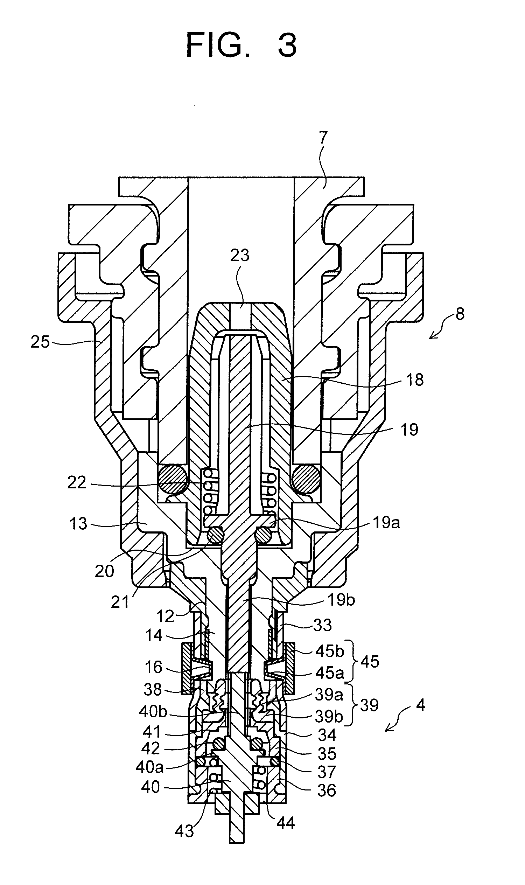

The socket 4 which is disposed in the fuel receiving portion 5 of the fuel cell 1 and the nozzle 8 which is attached on the cartridge body 7 of the fuel cartridge 6 configure a pair of connection mechanisms (coupler). A specific structure and connection structure of the coupler which is configured of the socket 4 and the nozzle 8 are described with reference to Fig. 2 and Fig. 3. Fig. 2 shows a state before the nozzle 8 of the fuel cartridge 6 and the socket 4 of the fuel cell 1 are connected, and Fig. 3 shows a state that the nozzle 8 and the socket 4 are mutually connected.

For the coupler for connecting (coupling) the fuel cell 1 and the fuel cartridge 6, the nozzle (male coupler) 8 as a connection mechanism on the side of the cartridge has a nozzle head 12 with a nozzle opening 11 opened at a tip end. The nozzle head 12 has a base section 13 which is fitted to a tip end opening portion of the cartridge body 7, and an inserting portion 14 which is inserted into the socket 4. The cylindrical inserting portion 14 is formed to protrude from the base section 13 such that its axial direction becomes parallel to the insert direction of the nozzle 8.

A recessed portion 15 is formed in a top surface of the tip end portion 14 of the nozzle head 12. The recessed portion 15 is formed by concaving the top surface of the inserting portion 14, and the nozzle opening 11 is formed in the bottom surface of the recessed portion 15. Since the recessed portion 15 functions as a storing portion for the liquid fuel remaining (adhering) on the tip end of the nozzle section 8, an operator is free from touching the liquid fuel. A peripheral groove 16 as a recessed portion for engagement with a nozzle holding mechanism of the socket 4 described later and a key portion 17 which functions as a fuel identification means are formed on an external peripheral surface of the inserting portion 14 of the nozzle head 12. As described later, the fuel identification means is configured of the key portion 17 and a key groove which is on the side of the socket 4.

A cup-like valve holder 18 is disposed within the base section 13 of the nozzle head 12. The valve holder 18 defines a valve chamber and is fixed with the outer edge portion of its tip end held between the cartridge body 7 and the base section 13. A valve 19 is disposed within the valve holder 18. The valve 19 is provided with a valve head 19a and a valve stem 19b. The valve head 19a is disposed within the valve chamber defined by the valve holder 18. The valve stem 19b is housed within the cylindrical inserting portion 14.

The valve 19 having the valve head 19a and the valve stem 19b described above is movable back and forth in an axial direction (insert direction of the nozzle 8). An O-ring 21 is disposed between the valve head 19a and a valve seat 20 formed within the base section 13. A force to press the valve head 19a to the valve seat 20 by an elastic body such as a compression spring 22 or the like is applied to the valve 19, thereby pressing the O-ring 21.

In a normal state (state that the fuel cartridge 6 is separated from the fuel cell 1), the O-ring 21 is pressed to the valve seat 20 via the valve head 19a to close the fuel passage in the nozzle 8. As described later, when the fuel cartridge 6 is connected to the fuel cell 1, the valve stem 19b retracts to separate the valve head 19a from the valve seat 20, and the fuel passage in the nozzle 8 is put in an open state. A communication hole 23 which is a liquid fuel passage is formed in the bottom of the valve holder 18, and the liquid fuel stored in the cartridge body 7 flows into the nozzle 8 through the communication hole 23.

Besides, a key ring (ring-shaped member) 24 having a cam mechanism and a container nozzle 25 are also disposed on the outer surface of the nozzle head 12. The key ring 24 is press-fitted on the nozzle head 12 and engaged with the nozzle head 12 during ordinary use. Application of force of bending, twisting or the like when the fuel cartridge 6 is connected to the fuel cell 1 causes rotational rising of the key ring 24 by means of the cam mechanism to release the connected state to separate the nozzle 8 from the socket 4. The container nozzle 25 is screwed onto the cartridge body 7, so that the nozzle 8 having the nozzle head 12, the valve 19 and the like is fixed to the tip end portion of the cartridge body 7.

The socket (female coupler) 4 as a connection mechanism on the side of the fuel cell is provided with a socket body 32 having a recessed nozzle inserting port 31. The socket body 32 has a cylindrical upper outer peripheral portion 33 and a lower outer peripheral portion 34. The upper outer peripheral portion 33 is configured of a metal material such as a stainless material and fixed to an upper outside of the resin lower outer peripheral portion 34.

A middle body part 35 and a lower body part 36 are arranged inside the upper outer peripheral portion 33 and the lower outer peripheral portion 34 to configure the socket body 32. An O-ring 37 is interposed between the middle body part 35 and the lower body part 36 to enhance airtightness of the valve chamber. The socket body 32 is integrally provided within the fuel receiving portion 5 of the fuel cell 1.

The upper outer peripheral portion 33 of the socket body 32 has a function to guide the outer circumferential surface of the nozzle head 12 when the nozzle 8 of the fuel cartridge 6 is connected by inserting into the socket 4. But, the outer peripheral portion of the leading end of the nozzle head 12 is not guided by the upper outer peripheral portion 33, and there is a gap between them. Therefore, a guide member 38 is arranged in the socket body 32 to guide the leading end outer peripheral portion of the nozzle 8 (nozzle head 12).

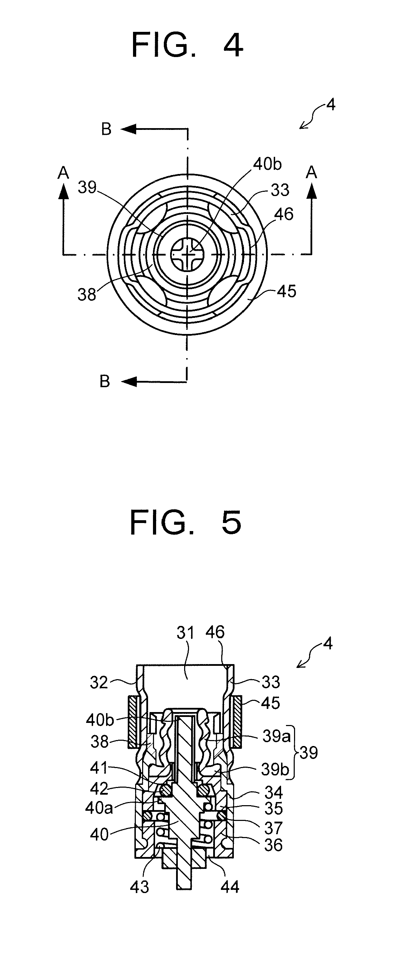

As shown in Fig. 4, Fig. 5 and Fig. 6, the ring-shaped guide member 38 is arranged above the upper end of the lower outer peripheral portion 34 arranged inside the upper outer peripheral portion 33. The ring-shaped guide member 38 has cutout portions 38a which become passing portions for a nozzle holding mechanism described later. The guide member 38 arranged on the lower outer peripheral portion 34 is held by the nozzle holding mechanism to prevent it from dropping from the socket body 32. Fig. 5 shows a sectional view taken along line A-A of Fig. 4, and the socket 4 of Fig. 2 shows a sectional view taken along line B-B of Fig. 4.

The ring-shaped guide member 38 has an internal shape corresponding to the leading end outer peripheral shape of the inserting portion 14 of the nozzle head 12. The guide member 38 guides the leading end outer peripheral portion of the nozzle 8 (specifically, the inserting portion 14) connected to the socket 4 to restrict the inclination of the nozzle 8 in the connected state. In the state that the nozzle 8 is connected to the socket 4, the guide member 38 arranged outside the leading end of the inserting portion 14 of the nozzle head 12 has a function of guiding the nozzle 8 and a function of centering based on it. Thus, the inclination of the nozzle 8 in the connected state is restricted.

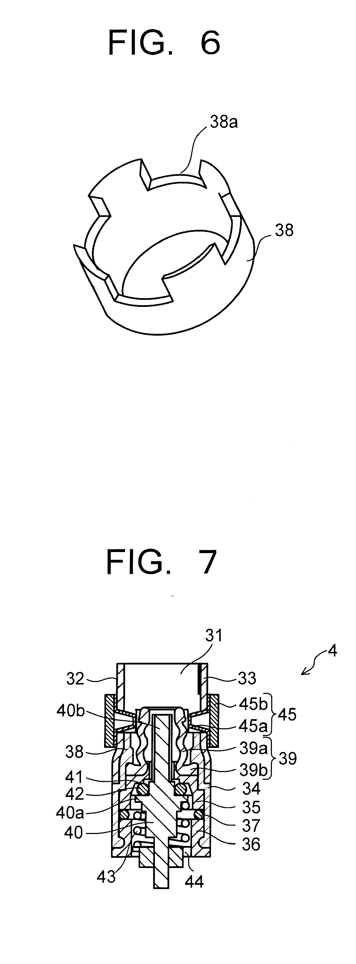

To obtain the guiding function and centering function of the nozzle 8 by the guide member 38, a clearance (gap) between the guide member 38 and the inserting portion 14 of the nozzle head 12 is desirably 0.4 mm or below. If the clearance between the guide member 38 and the inserting portion 14 is excessively large, the guiding function becomes insufficient, and the centering effect of the nozzle 8 connected to the socket 4 is also degraded. Thus, there is a possibility that the inclination of the nozzle 8 in the connected state can not be restricted sufficiently. Fig. 6 shows the ring-shaped guide member 38, but the shape of the guide member 38 is not limited to it, and various shapes of the guide member 38 capable of guiding the leading end outer peripheral portion of the nozzle 8 (specifically, the inserting portion 14) can be applied.

For example, the guide member 38 is configured of a resin material similar to the lower outer peripheral portion 34, middle body part 35 and lower body part 36 of the socket body 32. As the resin material configuring the guide member 38, a super engineering plastic or a general-purpose engineering plastic is preferably used considering durability and rigidity. Besides, the guide member 38 is more preferably configured of a resin material having slip properties.

Examples of the constituent material of the guide member 38 include general-purpose engineering plastics such as polyacetal (POM), polycarbonate (PC), polyethylene terephthalate (PET), polybutylene terephthalate (PBT) and syndiotactic polystyrene (SPS), and super engineering plastics such as polyether ether ketone (PEEK), polyphenylene sulfide (PPS), a liquid crystal polymer (LCP) and polyetherimide (PEI).

In addition to the guiding function of the nozzle 8 connected to the socket 4, the guide member 38 preferably has a function to release the connected state of the nozzle 8 and the socket 4 if an excessive force of bending, twisting or the like is applied to the nozzle 8 and the fuel cartridge 6 in the connected state. To obtain a connected state releasing function, the guide member 38 is preferably configured of a resin material having high slip properties. Examples of the resin material include polyacetal (POM), ultrahigh-density polyethylene (UHMWPE), high-density polyethylene (HDPE), low-density polyethylene (LDPE), polypropylene (PP), fluorine-based resin, polyamide resin and the like.

The guide member 38 is desirably configured of polyacetal (POM) having both durability and slip properties. To enhance the connection releasing function of the nozzle 8, the nozzle 8 (specifically, nozzle head 12) itself is also configured of a resin material excelling in slip properties. Especially, both the guide member 38 and the nozzle head 12 are configured of polyacetal (POM), so that their durability and rigidity can be improved, and the connection releasing function of the nozzle 8 can be enhanced. Thus, the nozzle 8 and the socket 4 can be suppressed from being damaged.

The metal upper outer peripheral portion 33 is arranged outside the guide member 38. The guide member 38 is arranged along the inner wall surface of the upper outer peripheral portion 33. The resin guide member 38 is reinforced by the metal upper outer peripheral portion 33, and the guiding function of the nozzle 8 can be enhanced in addition to the strength and durability of the socket body 32. When the guide member 38 itself is configured of a metal material, there is a possibility that the nozzle 8 is damaged if an excessive force of bending, twisting or the like is applied to the fuel cartridge 6. Therefore, the guide member 38 is preferably configured of a resin material.

Fig. 2 through Fig. 6 show a state that the ring-shaped guide member 38 is arranged above the lower outer peripheral portion 34, but the configuration of the guide member 38 is not limited to that shown in the drawings. For example, the guide member 38 may be integrally formed with the lower outer peripheral portion 34 as shown in Fig. 7. The guide member 38 shown in Fig. 7 is integrally provided with the lower outer peripheral portion 34 and arranged along the inner wall surface of the upper outer peripheral portion 33. Specific shape, function, constituent material and the like of the guide member 38 are the same as those of the ring-shaped member which is different from the lower outer peripheral portion 34.

Thus, the guide member 38 can be integrally formed with a part of the socket body 32. The integral formation of the socket body 32 with the guide member 38 is not limited to the lower outer peripheral portion 34, but the socket body 32 may be integrally formed with the upper outer peripheral portion 33 or the middle body part 35. The socket body 32 including the guide member 38 may be integrally formed as a whole. The guide member 38 can be integrally formed with at least a part of the socket body 32. When the guide member 38 is integrally formed with at least a part of the socket body 32, the number of component parts and the assembling manhours can be reduced.

A rubber holder 39 is mounted as an elastic holder on the middle body part 35 in the socket body 32 described above. The rubber holder 39 has a cylindrical holder body 39a which is elasticized in an axial direction on the basis of its bellows-like shape and material property (rubber elasticity), and a flange portion 39b which is provided below it. The flange portion 39b of the rubber holder 39 is fixed between a ring-shaped projected portion 34a of the lower outer peripheral portion 34 and the middle body part 35.

The rubber holder 39 is a sealing member which seals the nozzle head 12 by fitting its tip end to the recessed portion 15 which is formed in the inserting portion 14 of the nozzle head 12. The rubber holder 39 has a fuel passage therein. The rubber holder 39 is a sealing member for sealing between the outside and the liquid fuel passage at the time of opening the valve mechanism of the socket 4. The recessed portion 15 which is formed in the inserting portion 14 of the nozzle head 12 also has a function to form a seal when it is fitted to the tip end portion of the rubber holder 39.

A valve 40 is disposed within the socket body 32. The valve 40 is provided with a valve head 40a and a valve stem 40b. The valve head 40a is disposed within the valve chamber which is defined by the middle body part 35 and the lower body part 36. The valve stem 40b is housed in the rubber holder 39. The valve 40 is movable back and forth in the axial direction (insert direction of the nozzle 8). An O-ring 42 is disposed between the valve head 40a and a valve seat 41 which is formed on the under surface of the middle body part 35.

A force for pressing the valve head 40a to the valve seat 41 by an elastic body such as a compression spring 43 or the like is always applied to the valve 40 to press the O-ring 42. In a normal state (state that the fuel cartridge 6 is separated from the fuel cell 1), the O-ring 42 is pressed to the valve seat 41 via the valve head 40a. Thus, the fuel passage in the socket 4 is put in a closed state. When the fuel cartridge 6 is connected to the fuel cell 1, the valve stem 40b retracts to separate the valve head 40a from the valve seat 41, and the fuel passage in the socket 4 is put in an open state.

The lower body part 36 of the socket body 32 is provided with a communication hole 44 which is connected to the fuel storing section 3 through the fuel receiving portion 5. In the socket 4, the liquid fuel passage within the socket body 32 is connected to the fuel storing section 3 through the communication hole 44 formed in the lower body part 36. Then, the valves 19, 40 are put in an open state to open the fuel passages in the nozzle 8 and the socket 4 to enable to inject the liquid fuel stored in the fuel cartridge 6 into the fuel storing section 3 through the nozzle 8 and the socket 4.

Besides, a nozzle holding mechanism (holding mechanism in the connected state) 45 for holding the nozzle 8 connected to the socket 4 is disposed on the upper outer peripheral portion 33 of the socket body 32. The nozzle holding mechanism 45 has a hook portion 45a which is protruded in the radial direction toward the inside of the upper outer peripheral portion 33, and an elastic body 45b which applies a pressing force to the hook portion 45a so as to hold the nozzle 8. The hook portion 45a has a projecting portion which is protruded inward from the outside of the upper outer peripheral portion 33 and a flange portion which holds that posture. As the elastic body 45b, for example, a rubber-like elastic member (such as rubber sleeve) having a sleeve shape is used.

A pressing force is applied inwardly in the radial direction to the hook portion 45a by an elastic force of the elastic body 45b which is disposed on the outer surface of the upper outer peripheral portion 33 and also retractable outward in the radial direction. The nozzle holding mechanism 45 holds the connected state between the nozzle 8 and the socket 4 by engaging the hook portion 45a with the peripheral groove 16 which is formed in the outer circumference of the inserting portion 14 of the nozzle head 12. In a normal state, the nozzle 8 is elastically held by the hook portion 45a. If an excessive force of bending, twisting or the like is applied to the fuel cartridge 6 connected to the fuel cell 1, the hook portion 45a retracts to release the connected state between the nozzle 8 and the socket 4.

The upper outer peripheral portion 33 of the socket body 32 is provided with a key groove 46 which functions as fuel identification means. The key groove 46 has a shape to engage with the key portion 17 of the nozzle 8. The key portion 17 and the key groove 46 have a paired shape. An injection error of the liquid fuel can be prevented by defining the shape depending on the liquid fuel used. The key portion 17 is determined to have a shape complying with a type (type, concentration or the like) of the liquid fuel, and the key groove 46 is determined to have a shape complying with the key portion 17, so that only the fuel cartridge 6 which stores a liquid fuel suitable for the fuel cell 1 can be made connectable. Thus, it becomes possible to prevent an operation failure and property degradation due to an injection error of the liquid fuel.

To supply the liquid fuel stored in the fuel cartridge 6 to the fuel storing section 3 of the fuel cell 1, the nozzle 8 of the fuel cartridge 6 is connected to the socket 4 as shown in Fig. 3. The inserting portion 14 formed on the nozzle head 12 of the nozzle 8 is inserted into the socket 4 only when the key portion 17 and the key groove 46 have a mutually corresponding shape. Thus, when the inserting portion 14 of the nozzle 8 is inserted into the nozzle inserting port 31 of the socket 4, the tip end of the rubber holder 39 is fitted into the recessed portion 15 formed in the inserting portion 14 to seal the periphery of the liquid fuel passage before the valves 19, 40 are put in an open state.

When the inserting portion 14 of the nozzle head 12 and the rubber holder 39 are in a contacted state, insertion of the nozzle 8 into the socket 4 causes to mutually butt the tip ends of the valve stem 19b of the nozzle 8 and the valve stem 40b of the socket 4. When the nozzle 8 is further inserted into the socket 4, the valve 40 of the socket 4 retracts to fully open the passage, the valve 19 of the nozzle 8 retracts to establish the fuel passage, and the liquid fuel stored in the fuel cartridge 6 is supplied into the fuel storing section 3 of the fuel cell 1. At this time, the nozzle holding mechanism 45 of the socket 4 is engaged with the peripheral groove 16 of the nozzle head 12 to hold the connected state between the nozzle 8 and the socket 4.

In the connected state of the nozzle 8 and the socket 4 described above, the outer circumferential surface of the nozzle 8 (nozzle head 12) is guided by the upper outer peripheral portion 33 of the socket body 32, and the leading end outer peripheral portion of the nozzle 8 is guided by the guide member 38. Therefore, the inclination of the nozzle 8 in the connected state is limited. And, damage to or degradation of the sealing properties of the rubber holder 39 due to the inclination of the nozzle 8 can be suppressed.

Besides, if excessive bending, twisting or the like is applied to the fuel cartridge 6 when the nozzle 8 and the socket 4 are in a connected state, the nozzle 8 is separated from the socket 4 based on the slip properties and the like of the guide member 38. Thus, damage to the socket 4 or breakage of the nozzle 8, and occurrence of a defect (liquid leakage etc.) due to such a failure can be suppressed. Thus, the durability, reliability and safety of the fuel cell 1 can be enhanced.

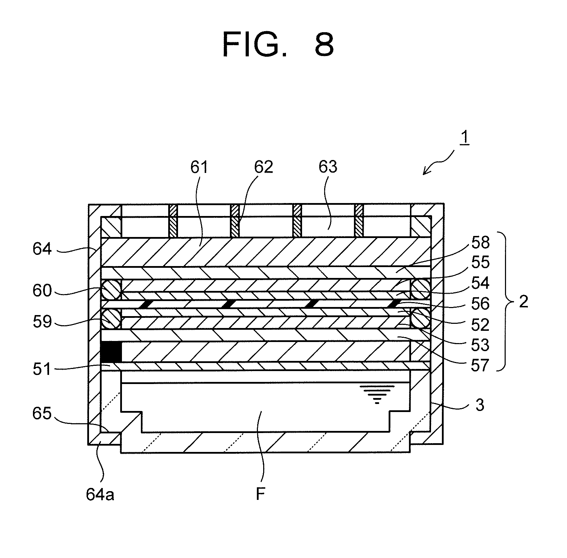

A specific structure of the power generation section 2 in the fuel cell 1 of the above-described embodiment is described below. The fuel cell 1 is not limited to a particular type, and for example, a passive or active type DMFC to which a satellite type fuel cartridge 6 is connected if necessary can be applied. An embodiment that the internal vaporization type DMFC is applied to the fuel cell 1 is described below with reference to Fig. 8. In addition to the power generation section 2 and the fuel storing section 3, the internal vaporization type (passive type) DMFC 1 shown in Fig. 8 is further provided with a gas-liquid separation layer 51 which is interposed between them.

The power generation section 2 is provided with a membrane electrode assembly (MEA) which is composed of an anode (fuel electrode) having an anode catalyst layer 52 and an anode gas diffusion layer 53, a cathode (oxidant electrode / air electrode) having a cathode catalyst layer 54 and a cathode gas diffusion layer 55, and a proton (hydrogen ion) conductive electrolyte membrane 56 sandwiched between the anode catalyst layer 52 and the cathode catalyst layer 54.

Examples of the catalyst contained in the anode catalyst layer 52 and the cathode catalyst layer 54 include a single element of platinum group elements such as Pt, Ru, Rh, Ir, Os, Pd, etc., an alloy containing a platinum group element. For the anode catalyst layer 52, it is preferable to use Pt-Ru, Pt-Mo or the like which has high resistance to methanol and carbon monoxide. It is preferable to use Pt, Pt-Ni or the like for the cathode catalyst layer 54. The catalyst may be a supported catalyst using a conductive carrier such as carbon material or an unsupported catalyst.

Examples of the proton conductive material configuring the electrolyte membrane 56 include a fluorine-based resin such as a perfluorosulfonic acid polymer having a sulfonic group, a hydrocarbon-based resin having the sulfonic group, an inorganic substance such as tungstic acid or phosphotungstic acid, and the like. Specific examples of the fluorine-based resin having a sulfonic group include Nafion (trade name, a product of DuPont), Flemion (trade name, a product of Asahi Glass Co., Ltd.) and the like. But, they are not used exclusively.

The anode gas diffusion layer 53 superposed on the anode catalyst layer 52 serves to uniformly supply the fuel to the anode catalyst layer 52 and also has a power collecting function of the anode catalyst layer 52. The cathode gas diffusion layer 55 superposed on the cathode catalyst layer 54 serves to uniformly supply an oxidant to the cathode catalyst layer 54 and also has a power collecting function of the cathode catalyst layer 54. An anode conductive layer 57 is superposed as a power collector on the anode gas diffusion layer 53. A cathode conductive layer 58 is superposed as a power collector on the cathode gas diffusion layer 55.

The anode conductive layer 57 and the cathode conductive layer 58 are configured of, for example, a mesh, a porous film, a thin film or the like which is formed of a conductive metal material such as Au. Besides, rubber O-rings 59, 60 are interposed between the electrolyte membrane 56 and the anode conductive layer 57 and between the electrolyte membrane 56 and the cathode conductive layer 58, respectively. They prevent the fuel and the oxidant from leaking from the power generation section 2.

A methanol fuel is filled as a liquid fuel F in the fuel storing section 3. The fuel storing section 3 has an opening on the side of the power generation section 2 and the gas-liquid separation layer 51 disposed between the opening portion of the fuel storing section 3 and the power generation section 2. The gas-liquid separation layer 51 is a film which allows the passage of only the vaporized component of the liquid fuel F but does not allow the passage of the liquid component. The component materials of the gas-liquid separation layer 51 include, for example, a fluorine resin such as polytetrafluoroethylene. The vaporized component of the liquid fuel F means a gas mixture which consists of a vaporized component of methanol and a vaporized component of water when the aqueous methanol solution is used as the liquid fuel F, and a vaporized component of methanol when pure methanol is used.

A moisture retaining layer 61 is superposed on the cathode conductive layer 58, and a surface layer 62 is further superposed on it. The surface layer 62 has a function to adjust an introduced volume of oxidant air. The introduced volume of air is adjusted by the quantity and size of air introduction ports 63 formed in the surface layer 62. The moisture retaining layer 61 serves to suppress water evaporation by partial impregnation of water generated by the cathode catalyst layer 54 and also has a function to promote uniform diffusion of the oxidant to the cathode catalyst layer 54 by uniform introduction of the oxidant into the cathode gas diffusion layer 55. The moisture retaining layer 61 is formed of a member having a porous structure, such as a porous body of polyethylene or polypropylene.

The gas-liquid separation layer 51, the power generation section 2, the moisture retaining layer 61 and the surface layer 62 are sequentially stacked on the fuel storing section 3, and they are entirely covered with a stainless steel cover 64 to configure the passive type DMFC 1. The cover 64 is provided with openings at portions corresponding to the air introduction ports 63 which are formed in the surface layer 62. The fuel storing section 3 is provided with a terrace 65 for receiving fixture portions 64a of the cover 64, and the terrace 65 is caught by caulking the fixture portions 64a to entirely hold the DMFC 1 by the cover 64. It is not shown in Fig. 8, but the fuel receiving portion 5 having the socket 4 is provided on the under surface of the fuel storing section 3 as shown in Fig. 1.

According to the passive type DMFC (fuel cell) 1 having the structure described above, the liquid fuel F (e.g., the aqueous methanol solution) in the fuel storing section 3 is vaporized, and the vaporized component is supplied to the power generation section 2 through the gas-liquid separation layer 51. In the power generation section 2, the vaporized component of the liquid fuel F is diffused by the anode gas diffusion layer 53 and supplied to the anode catalyst layer 52. The vaporized component supplied to the anode catalyst layer 52 causes an internal reforming reaction of methanol expressed by the following formula (1).

(1) CH₃OH + H₂O → CO₂ + 6H⁻ + 6⁻

When pure methanol is used as the liquid fuel F, steam is not supplied from the fuel storing section 3, so that water produced by the cathode catalyst layer 54 and water in the electrolyte membrane 56 are reacted with methanol to cause the internal reforming reaction expressed by the formula (1). Otherwise, an internal reforming reaction is caused by another reaction mechanism not requiring water without depending on the above-described internal reforming reaction of the formula (1).

Proton (H⁺) produced by the internal reforming reaction reaches the cathode catalyst layer 54 through the electrolyte membrane 56. Air (oxidant) introduced through the air introduction ports 63 of the surface layer 62 is diffused into the moisture retaining layer 61, the cathode conductive layer 58 and the cathode gas diffusion layer 55 and supplied to the cathode catalyst layer 54. The air supplied to the cathode catalyst layer 54 causes the reaction expressed by following formula (2). This reaction causes a power generation reaction involving the generation of water.

(2) (3/2) O₂ + 6H⁺ + 6⁻ → 3H₂O

With the progress of the power generation reaction based on the above-described reaction, the liquid fuel F (e.g., an aqueous methanol solution or pure methanol) in the fuel storing section 3 is consumed. Since the power generation reaction stops when the liquid fuel F in the fuel storing section 3 is exhausted, the liquid fuel is supplied from the fuel cartridge 6 into the fuel storing section 3 at that time or before that. The supply of the liquid fuel from the fuel cartridge 6 is performed with the nozzle 8 of the fuel cartridge 6 connected to the socket 4 of the fuel cell 1 by inserting into it as described above.

The present invention is not limited to any method, mechanism or the like of a fuel cell if the fuel cell supplies the liquid fuel by means of the fuel cartridge. The present invention is particularly suitable for a passive type DMFC which is under downsizing. The fuel cell is not limited to a particular structure either, and in a practical phase, it can be materialized with the component elements modified within the scope of technical idea of the present invention. Besides, various modifications such as an appropriate combination of the plural component elements described in the above embodiments, deletion of some component elements from the whole component elements shown in the embodiments, or the like can be made. The embodiments of the present invention can be expanded or modified within the scope of technical idea of the present invention, and the expanded and modified embodiments are also included in the technical scope of the invention.

### Industrial Applicability

A fuel cell socket according to an embodiment of the present invention can suppress the inclination of a nozzle because it is provided with a guide member for guiding a leading end outer peripheral portion of the nozzle at the time of connection of the nozzle of a fuel cartridge. A fuel cell applying such a fuel cell socket excels in reliability and safety and can be used effectively as a power source for various types of devices and equipment.

## Claims

1. A fuel cell socket to which a nozzle of a fuel cartridge is removably connected and which serves as a fuel supply section to supply a fuel cell with a liquid fuel stored in the fuel cartridge, comprising:
a socket body having a nozzle inserting port into which the nozzle is inserted;
a valve mechanism housed in the socket body;
an elastic holder arranged in the socket body to seal a fuel passage when the valve mechanism is opened; and
a guide member arranged within the socket body to guide a leading end outer peripheral portion of the nozzle connected to the socket and to restrict an inclination of the nozzle in a connected state.

2. The fuel cell socket according to claim 1,
wherein the guide member has a function to guide the nozzle in the connected state and a centering function based on it.

3. The fuel cell socket according to claim 1,
wherein the guide member has a ring shape.

4. The fuel cell socket according to claim 3,
wherein the guide member has an internal shape corresponding to the shape of the leading end outer peripheral portion of the nozzle.

5. The fuel cell socket according to claim 1,
wherein the guide member is integrally formed with at least a part of the socket body.

6. The fuel cell socket according to claim 3,
wherein the socket body has a cylindrical upper outer peripheral portion and a cylindrical lower outer peripheral portion which is fixed to the upper outer peripheral portion, and the guide member is arranged on the lower outer peripheral portion along an inner wall surface of the upper outer peripheral portion.

7. The fuel cell socket according to claim 6,
wherein the upper outer peripheral portion is formed of a metal material, and the lower outer peripheral portion and the guide member are formed of a resin material.

8. The fuel cell socket according to claim 3,
wherein the socket body has a cylindrical upper outer peripheral portion and a cylindrical lower outer peripheral portion which is fixed to the upper outer peripheral portion, and the guide member is integrally provided with the lower outer peripheral portion along an inner wall surface of the upper outer peripheral portion.

9. The fuel cell socket according to claim 8,
wherein the upper outer peripheral portion is formed of a metal material, and the lower outer peripheral portion and the guide member are formed of a resin material.

10. The fuel cell socket according to claim 1,
wherein the guide member is formed of at least one resin material selected from polyacetal, polycarbonate, polyethylene terephthalate, polybutylene terephthalate, syndiotactic polystyrene, polyether ether ketone, polyphenylene sulfide, a liquid crystal polymer, polyetherimide, ultrahigh-density polyethylene, high-density polyethylene, low-density polyethylene, polypropylene, a fluorine-based resin and a polyamide resin.

11. The fuel cell socket according to claim 1,
wherein the guide member is formed of at least one resin material selected from polyacetal, ultrahigh-density polyethylene, high-density polyethylene, low-density polyethylene, polypropylene, a fluorine-based resin and a polyamide resin.

12. The fuel cell socket according to claim 1,
wherein a clearance between the guide member and the nozzle is 0.4 mm or less.

13. A fuel cell, comprising:
a fuel receiving portion provided with the fuel cell socket according to claim 1 to receive a liquid fuel supplied through a nozzle of a fuel cartridge connected to the socket;
a fuel storing section storing the liquid fuel supplied from the fuel cartridge; and
a power generation section operating to generate power upon receiving the liquid fuel from the fuel storing section.

14. The fuel cell according to claim 13,
wherein the power generation section is provided with a membrane electrode assembly having a fuel electrode, an oxidant electrode, and an electrolyte membrane held between the fuel electrode and the oxidant electrode.

15. The fuel cell according to claim 13, further comprising a gas-liquid separation film which is interposed between the fuel storing section and the power generation section and supplies the fuel electrode with a vaporized component of the liquid fuel.

16. The fuel cell according to claim 13,
wherein the socket restricts an inclination of the nozzle in the connected state according to a guiding function of the nozzle by the guide member and a centering function based on it.

17. The fuel cell according to claim 16,
wherein the guide member is arranged within the socket to be positioned outside the leading end of the nozzle connected to the socket.

18. The fuel cell according to claim 13,
wherein the guide member of the socket has a ring shape.

19. The fuel cell according to claim 13,
wherein the guide member of the socket is formed of at least one resin material selected from polyacetal, polycarbonate, polyethylene terephthalate, polybutylene terephthalate, syndiotactic polystyrene, polyether ether ketone, polyphenylene sulfide, a liquid crystal polymer, polyetherimide, ultrahigh-density polyethylene, high-density polyethylene, low-density polyethylene, polypropylene, a fluorine-based resin and a polyamide resin.

20. The fuel cell according to claim 13, wherein a clearance between the guide member of the socket and the nozzle is 0.4 mm or below.
